# EUROPÄISCHE PATENTANMELDUNG

(11) **EP 0 673 124 A2**
(43) Veröffentlichungstag der Anmeldung: **20.09.1995**
(21) Anmeldenummer: 95103891.8
(22) Anmeldetag: 16.03.1995
(51) Int. Cl.: H04B 1/38

(54) **Handfunktelefon**

(30) Priorität: 16.03.1994 CH 776/94
(71) Anmelder: PORSCHE DESIGN GMBH, A-5700 Zell am See (AT)
(72) Erfinder: Porsche, Ferdinant.A, D-70192 Stuttgart (DE)
(74) Vertreter: Herrmann-Trentepohl, Werner, Dipl.-Ing.

(57) **Zusammenfassung**

Ein Handfunktelefon (1) weist eine Schutzhülle (2) auf, die in der Art eines Bucheinbandes ausgebildet ist. Die Schutzhülle (2) weist zwei aufklappbare Deckel (3, 4) auf. Zum Telefonieren bei geschlossener Schutzhülle sind entsprechend der Position eines Mikrofons (12) und eines Lautsprechers (11) Oeffnungen (10 resp. 9) vorgesehen.

## Beschreibung

### Stand der Technik

Handfunktelefone sind heutzutage technisch ausgereifte, qualitativ hochstehende elektronische Geräte. Der Verkaufserfolg wird daher immer weniger von der (ohnehin hohen) Qualität der Elektronik und immer mehr von der ästhetischen Ausgestaltung bestimmt. Gefragt sind somit besondere Komfortmerkmale und aussergewöhnliche Aufmachung.

### Darstellung der Erfindung

Aufgabe der Erfindung ist es, ein Handfunktelefon mit einem besonderen Komfortmerkmal zu schaffen.

Die Erfindung schlägt deshalb vor, das Handfunktelefon mit einer in der Art eines Bucheinbandes ausgebildeten, am Handfunktelefon befestigten, zum wählen aufklappbaren Schutzhülle zu versehen.

Von aussen sieht das Ganze somit wie ein Buch oder eine Agenda aus. Zum Bedienen des Handfunktelefons wird die Schutzhülle aufgeschlagen. Erfindungsgemäss sind Schutzhülle und Handfunktelefon miteinander verbunden. Anders als bei einem konventionellen Stecketui, aus welchem das Gerät herausgenommen werden muss, verbleibt bei der Erfindung das Handfunktelefon stets in der Schutzhülle.

Vorzugsweise ist die Schutzhülle an einer Schmalseite des Handfunktelefons befestigt. Die Schutzhülle weist dabei einen front- und einen rückseitigen Deckel auf, welche beide aufklappbar sind. Beim Aufklappen des frontseitigen Deckels wird die Tastatur zugänglich und beim Aufklappen des rückseitigen ein Batterie- bzw. Akkumulatorfach. Aehnlich wie bei einem Buch die Gesamtheit der Seiten, sind (bei geschlossener Schutzhülle) beim erfindungsgemässen Einband drei Schmalseiten des Handfunktelefons sichtbar. Es ist natürlich auch denkbar, die Schutzhülle als geschlossenes Kistchen auszubilden, das von aussen aussieht wie ein Buch. Bei geschlossener Schutzhülle ist dann das Handfunktelefon vollständig geschützt.

Anstatt den Rücken (des Einbandes) mit der Schmalseite (des Handfunktelefons) zu verbinden, kann der rückseitige Deckel an der Hinterseite des Handfunktelefons befestigt werden.

Gemäss einer bevorzugten Ausführungsform entsprechen front- und rückseitiger Deckel der Schutzhülle den Aussenabmessungen des Handfunktelefons, um so eine vollständige Abdeckung von Vorder- und Rückseite des Handfunktelefons zu bieten. Es ist aber auch möglich, die Schutzhülle so zu bemessen, dass ein Teil des Handfunktelefons unabgedeckt bleibt.

Damit auch bei geschlossener Schutzhülle telefoniert werden kann, weist der frontseitige Deckel entsprechend der Position eines Sprechmikrofons und eines Lautsprechers des Apparats Oeffnungen für den Schalldurchtritt auf. Weitere Oeffnungen können z. B. für eine bestimmte Taste (z. B. die Taste SEND/END oder SOS) oder, um das Handfunktelefon trotz geöffnetem Deckel besser fassen zu können, vorgesehen sein. Bei nur teilweiser Abdeckung durch den frontseitigen Deckel gehören zu den nicht abgedeckten Zonen insbesondere Sprechmikrofon und Hörkapsel.

Ein besonderer Hörkomfort ergibt sich z. B. dadurch, dass der frontseitige Deckel insbesondere beim Lautsprecher aussenseitig gepolstert ist. Als Komfort wird dabei nicht nur die sanfte Anpassung der Schutzhülle an das Ohr, sondern auch die gute akustische Kopplung (Kopfhörereffekt) empfunden.

Vorzugsweise ist die Schutzhülle ein durch eine Einlage versteiftes, ggf. gepolstertes Leder. Statt Leder kann auch ein Kunstleder oder ein anderes weiches Material dienen.

Vorzugsweise ist die Schutzhülle am Handfunktelefon durch eine an der Schmalseite befestigte Leiste angeklemmt. Die Leiste bildet also quasi den Buchrücken.

Vorzugsweise ist ein bei geschlossener Schutzhülle betätigbares Bedienungselement zur Steuerung der Lautstärke vorgesehen. Es ist z. B. an einer Schmalseite angeordnet und erlaubt die Lautstärke des Lautsprechers bei geschlossener Schutzhülle, während des Telefonierens zu variieren.

Von Vorteil ist es, wenn ein irgendwie gearteter Verschluss, z. B. ein Magnetverschluss vorgesehen ist, um den frontseitigen Deckel geschlossen zu halten. Bei einer besonders komfortablen Ausführungsform kann sogar ein durch eine Taste betätigbarer Verriegelungsmechanismus und eine im Schutzeinband integrierte Feder vorgesehen sein. Die Feder öffnet den Deckel beim Betätigen der Taste.

Der rückseitige Deckel kann u. U. direkt am Handfunktelefon angeklebt, festgeschraubt oder in anderer Weise befestigt sein. Er kann aber auch einen abgetrennten Teil aufweisen, der separat schwenkbar ist, um das Batteriefach zugänglich zu halten.

Der Schutzeinband kann z. B. bei im wesentlichen quaderförmigem Handfunktelefon mit einem flachen Deckel oder bei ausgeprägten Oberflächenkonturen mit einem entsprechend gewölbten bzw. geschwungenen Deckel versehen sein. Vorzugsweise ist dabei die Tastatur in der Höhe etwas zurückversetzt, damit der geschlossene Deckel nicht auf die Tasten drückt.

Aus der Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1a, b: eine schematische perspektivische Darstellung eines im wesentlichen quaderförmigen Handfunktelefons in einer bucheinbandähnlichen Schutzhülle;
- Fig. 2: eine schematische Darstellung eines Schnitts durch die Befestigung der Schutzhülle am Handfunktelefon;
- Fig. 3: eine Seitenansicht der in Fig. 1a, b schematisch dargestellten Ausführungsform;
- Fig. 4: eine vergrösserte Schnittdarstellung einer erfindungsgemässen Hörkapselpolsterung;
- Fig. 5: eine Ausführungsform einer das Handfunktelefon nur teilweise abdeckenden Schutzhülle;
- Fig. 6: eine Ausführungsform, bei welcher die Schutzhülle das Handfunktelefon nicht vollständig abdeckt;
- Fig. 7: eine Ausführungsform, bei welcher die Schutzhülle im Bereich der Hörmuschel gepolstert ist.

Grundsätzlich sind in den Zeichnungen gleiche Teile mit gleichen Bezugszeichen versehen.

### Wege zur Ausführung der Erfindung

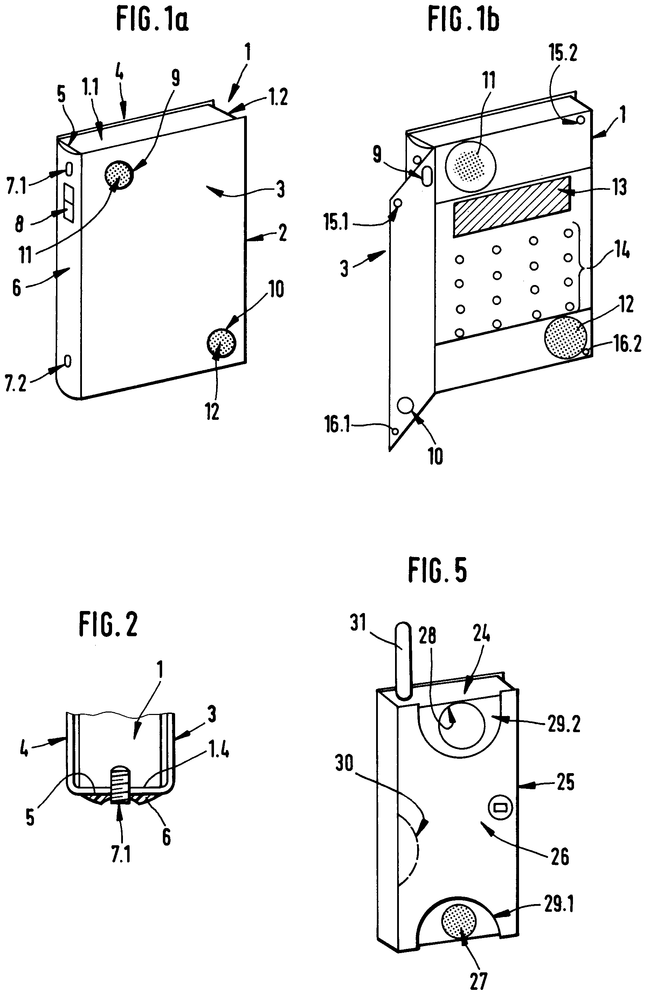

Fig. 1a, b zeigen ein quaderförmiges Handfunktelefon 1, welches in einer bucheinbandähnlichen Schutzhülle 2 enthalten ist. Die schutzhülle 2 weist einen frontseitigen Deckel 3 und einen rückseitigen Deckel 4 auf. Diese sind, ähnlich wie bei einem Bucheinband, durch einen streifenförmigen Rücken 5 verbunden. Letzterer ist mit einer Kunststoffleiste 6 an einer Schmalseite 1.4 (vgl. Fig. 2) des Handfunktelefons 1 festgeschraubt (Schrauben 7.1, 7.2).

Gemäss einer bevorzugten Ausführungsform sind der Rücken 5 und die Kunststoffleiste 6 mit einer Oeffnung versehen, durch die ein an der Schmalseite 1.4 vorgesehener Schalter 8 für die Lautstärkenregelung zugänglich ist.

Zwei entsprechend Lautsprecher 11 und Mikrofon 12 des Handfunktelefons 1 ausgebildete runde Oeffnungen 9, 10 der Schutzhülle 2 ermöglichen es, bei geschlossenem Deckel 3 zu telefonieren.

Der Deckel 3 kann wie ein Buchdeckel aufgeschlagen werden (vgl. Fig. 1b). Er gibt ein Display 13 und eine Tastatur 14 frei. Zum Wählen einer Nummer muss also der Deckel 3 geöffnet werden. Falls an einer Schmalseite (z. B. 1.2) des Handfunktelefons 1 ein (nicht dargestellter) Schalter zum Entgegennehmen eines Anrufs vorgesehen ist, kann ein eingehender Anruf, ohne die Schutzhülle 2 zu öffnen, empfangen werden.

Im vorliegenden Beispiel ist der Deckel 3 durch zwei Magnetverschlüsse 15.1, 15.2 und 16.1, 16.2 in geschlossener Position gehalten. Die Magnetverschlüsse 15.1, 15.2, 16.1, 16.2 verhindern also, dass der Deckel 3 sich ungewollt öffnet.

Statt eines Magnetverschlusses kann natürlich auch ein Druckknopf, ein Klett- oder ein sonstiger Verschluss vorgesehen sein.

Fig. 2 zeigt das Handfunktelefon von der (sichtbaren) Schmalseite 1.2. 1.1 und 1.3 bezeichnen die kurzen Schmalseiten des quaderförmigen Handfunktelefons 1.

Die vom Deckel 3 abgedeckte Frontseite weist drei höhenmässig zueinander versetzte Frontflächenbereiche 17.1, 17.2, 17.3 auf. Im vorliegenden Beispiel ist der Frontflächenbereich 17.2, in welchem die Tastatur 14 angeordnet ist, gegenüber den Frontflächenbereichen 17.1 und 17.3 (in welchen der Lautsprecher 11 resp. das Mikrofon 12 angeordnet sind) geringfügig zurückversetzt. Der geschlossene Deckel 3 liegt damit nur auf den Frontflächenbereichen 17.1 und 17.3, nicht jedoch auf den Tasten 14.1 (die aus dem Frontflächenbereich 17.2 herausragen) auf.

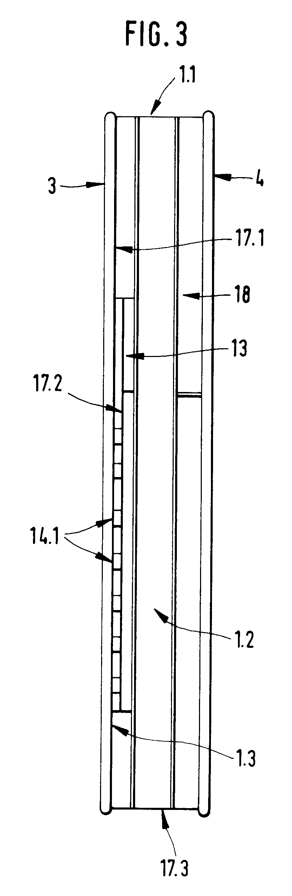

In Fig. 3 ist ferner ein rückseitig angeordnetes Batteriefach 18 eingezeichnet. Um dieses zugänglich zu machen, ist der rückseitige Deckel als ganzes aufklappbar (analog zum frontseitigen Deckel 3). Es kann natürlich auch nur der über dem Batteriefach 18 liegende Teil des Deckels 4 klappbar ausgebildet sein.

Fig. 2 zeigt ausschnittsweise einen Querschnitt durch eine bereits erwähnte Schraubverbindung. Der Rücken 5, an dem die beiden Deckel 3 und 4 hängen, ist mit der Kunststoffleiste 6 mit Hilfe der Schraube 7.1 am Handfunktelefon 1 festgeklemmt.

Aus Fig. 2 ist weiter zu ersehen, dass die Kunststoffleiste 6 einen gewölbten Rücken hat, in welchem ferner eine Vertiefung für die Schraube 7.1 ausgebildet ist.

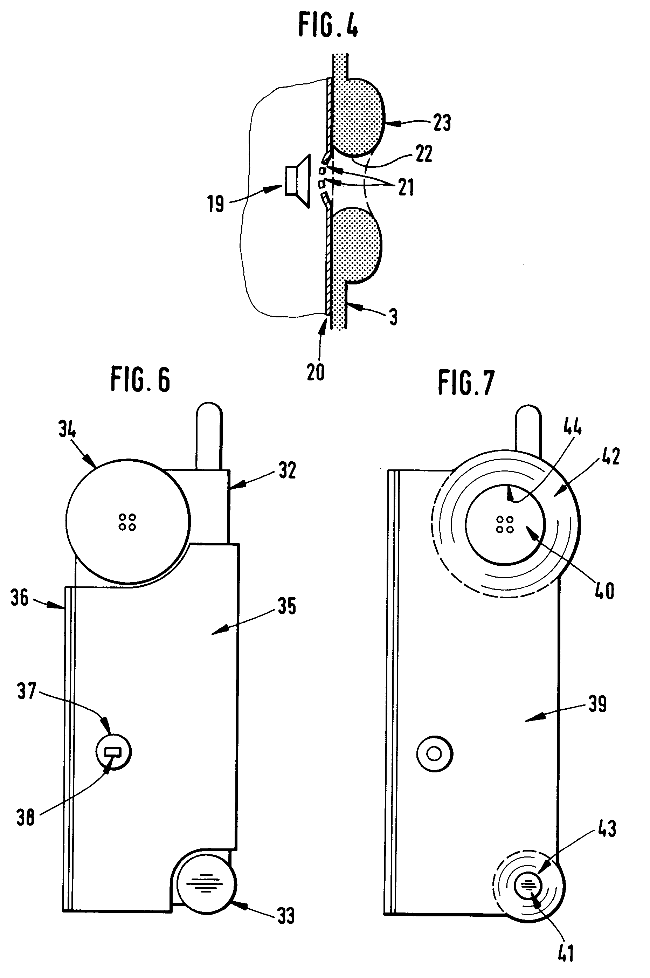

Fig. 4 zeigt eine Detailansicht der Hörkapsel samt umgebende Teile. Ein Lautsprecher 19 ist hinter einer Gehäusewand 20 mit Schlitzen 21 angeordnet. Durch diese Schlitze 21 wird der Schall abgestrahlt. Der Deckel 3 weist im Bereich des Lautsprechers 19 wie bereits erwähnt eine runde Oeffnung 22 auf. Diese ist umgeben von einem gepolsterten Wulst 23, welcher für den angenehmen "Kopfhörereffekt" sorgt.

Vorzugsweise ist die Schutzhülle aus (echtem oder künstlichem) Leder gefertigt. Zur Versteifung der Deckel 3 und 4 kann ein Karton- oder Kunststoffblatt in der Schutzhülle integriert sein. U. U. ist sogar eine Metallverstärkung denkbar.

Die in den Fig. 1a, b gezeigte Schutzhülle, insbesondere deren Deckel 3, deckt das Handfunktelefon 1 (resp. dessen Frontseite) im wesentlichen vollständig ab. Dies ist jedoch kein zwingendes Erfordernis der Erfindung.

Fig. 5 veranschaulicht beispielhaft eine Ausführungsform, bei der ein Schutzeinband 25 ein Handfunktelefon 24 nicht vollständig abdeckt. Das gezeigte Handfunktelefon 24 weist einen Schutzeinband 25 auf, dessen frontseitiger Deckel 26 im Bereich des Mikrofons 27 und des Lautsprechers 28 grossräumige Ausnehmungen 29.1 resp. 29.2 aufweist. Sie sind im vorliegenden Beispiel halbkreisförmig gestaltet. Selbstverständlich sind auch andere Formen denkbar.

Zusätzlich kann im Deckel 26 eine Ausnehmung im Bereich des Displays des Handfunktelefons vorgesehen sein. Nicht ausgeschlossen, aber mangels Tastschutz nur bedingt von Vorteil ist eine Ausnehmung im Bereich des Tastaturfelds. Von Vorteil wäre bei einer solchen Ausführungsform natürlich, dass eine Telefonnummer bei geschlossenem Deckel eingetippt werden kann.

Ein gestrichelt eingezeichneter Schlitz 30, der einen Bereich abgrenzt, der beim Aufklappen des Deckels auf der Frontseite des Handfunktelefons verbleiben kann, erleichtert das Halten des Geräts bei geöffnetem Deckel.

Der Vollständigkeit halber ist ein Antennenstummel 31 eingezeichnet. An dessen Stelle kann auch eine ausklapp- bzw. fahrbare Antenne vorgesehen sein.

Fig. 6 zeigt eine weitere Ausführungsform. Ein im wesentlichen quaderförmiges Handfunktelefon 32 weist eine (von vorne betrachtet) oben links angeordnete Hörmuschel 34 und ein unten rechts angeordnetes Mikrofon 33 auf. Hörmuschel 34 und Mikrofon 33 sind tellerförmig ausgebildet und ragen über die genannte quaderförmige Grundform leicht hinaus. Ein Einband 35 aus Leder ist mit seinem Rücken 36 an der (von vorne betrachtet) linken Schmalseite des Handfunktelefons 32 befestigt. Der Einband 35 lässt sowohl das Mikrofon 33 als auch die Hörmuschel 34 frei. Im vorliegenden Beispiel ist das ganze obere Ende des Handfunktelefons im Bereich der Hörmuschel 34 ohne Abdeckung.

Auf halber Höhe, vorzugsweise in der Nähe des Rückens 36, ist eine Oeffnung 37 für eine SEND/END-Taste 38 vorgesehen.

Fig. 7 schliesslich zeigt eine Ausführungsform, bei der eine Schutzhülle 39 im Bereich eines Lautsprechers 40 eines Handfunktelefons eine ringförmige Polsterung 42 aufweist. Diese ist z. B. wie in Fig. 4 gezeigt ausgeführt. Die Polsterung 42 umschliesst eine für den Lautsprecher 40 vorgesehene Oeffnung 44 der Schutzhülle.

Gemäss einer weiteren bevorzugten Ausführungsform, weist die Schutzhülle 39 im Bereich des Mikrofons 41 eine z. B. sphärische Wölbung 43 auf.

Die Erfindung beschränkt sich natürlich nicht auf die dargestellten Ausführungsbeispiele. Insbesondere können anstelle von quaderförmigen Geräten irgenwelche fantasievoll gestaltete Formen treten. Die Schutzhülle wird dann je nach Bedarf mit aus- oder eingebuchteten Bereichen entsprechend der Form des eingehüllten Handfunktelefons versehen sein.

Der die Frontseite abdeckende Deckel kann im Unterschied zu den gezeigten Varianten statt um die linke Kante auch um die rechte oder sogar die obere oder untere Kante der Frontseite des Handfunktelefons schwenkbar sein.

Zusammenfassend ist festzuhalten, dass durch die Erfindung ein neues Gestaltungselement eines Handfunktelefons geschaffen worden ist. Es macht das Gerät attraktiver, indem es ihm eine besondere Note (Aussehen einer Agenda, eines Notizblocks bzw. eines Buches) gibt. Durch die besondere Gestaltung der Schutzhülle ist der Benutzer nicht geneigt, diese als lästig zu empfinden und zu entfernen. Das Handfunkgerät ist stets gut geschützt gegen schädigende Umwelteinflüsse. Das Gerät liegt sehr angenehm in der Hand und am Ohr.

### Bezugszeichenliste

- 1: Handfunktelefon
- 1.1, ..., 1.4: Schmalseite
- 2: Schutzhülle
- 3, 4: Deckel
- 5: Rücken
- 6: Kunststoffleiste
- 7.1, 7.2: Schraube
- 8: Schalter
- 9, 10: Oeffnung
- 11: Lautsprecher
- 12: Mikrofon
- 13: Display
- 14: Tastatur
- 14.1: Taste
- 15.1, 15.2: Magnetverschluss
- 16.1, 16.2: Magnetverschluss
- 17.1, 17.2, 17.3: Frontflächenbereich
- 18: Batteriefach
- 19: Lautsprecher
- 20: Gehäusewand
- 21: Schlitz
- 22: Oeffnung
- 23: Wulst
- 24: Handfunktelefon
- 25: Schutzeinband
- 26: Deckel
- 27: Mikrofon
- 28: Lautsprecher
- 29.1, 29.2: Ausnehmung
- 30: Schlitz
- 31: Antennenstummel
- 32: Handfunktelefon
- 33: Mikrofon
- 34: Hörmuschel
- 35: Einband
- 36: Rücken
- 37: Oeffnung
- 38: SEND/END-Taste
- 39: Schutzhülle
- 40: Lautsprecher
- 41: Mikrofon
- 42: Polsterung
- 43: Wölbung
- 44: Oeffnung

## Patentansprüche

1. Handfunktelefon, gekennzeichnet durch eine in der Art eines Bucheinbandes ausgebildete, am Handfunktelefon (1) befestigte (6, 7.1, 7.2), zum Wählen aufklappbare Schutzhülle (2).

2. Handfunktelefon nach Anspruch 1, dadurch gekennzeichnet, dass die Schutzhülle (2) an einer Schmalseite (1.4) des Handfunktelefons (1) befestigt ist und dass verbleibende Schmalseiten (1.1, ..., 1.3) nicht abgedeckt sind.

3. Funktelefon nach einem der Ansprüche 1 oder 2, dadurch gekennzeichnet, dass ein front- und ein rückseitiger Deckel (3 resp. 4) entsprechend den Aussenabmessungen des Handfunktelefons (1) ausgebildet sind, um eine vollständige Abdeckung zu bieten.

4. Handfunktelefon nach einem der Ansprüche 1 bis 3, dadurch gekennzeichnet, dass ein frontseitiger Deckel (3; 26) entsprechend einer Position eines Sprechmikrofons (12; 27) und eines Lautsprechers (11; 28) Oeffnungen (10 resp. 9; 29.1 resp. 29.2) für einen Schalldurchtritt aufweist.

5. Handfunktelefon nach Anspruch 4, dadurch gekennzeichnet, dass der frontseitige Deckel (3) vorzugsweise bei der für den Lautsprecher (19) vorgesehenen Oeffnung (22) aussenseitig gepolstert (23) ist.

6. Handfunktelefon nach einem der Ansprüche 1 bis 5, dadurch gekennzeichnet, dass die Schutzhülle (2) ein durch eine Einlage versteiftes weiches Material, insbesondere Leder ist.

7. Handfunktelefon nach einem der Ansprüche 2 bis 6, dadurch gekennzeichnet, dass an ihm die Schutzhülle (2) durch eine an der Schmalseite (1.4) befestigte Leiste (6) festgeklemmt ist.

8. Handfunktelefon nach einem der Ansprüche 1 bis 7, dadurch gekennzeichnet, dass ein bei geschlossener Schutzhülle (2) betätigbares Bedienungselement (8) zur Steuerung der Lautstärke vorgesehen ist.

9. Handfunktelefon nach einem der Ansprüche 1 bis 8, dadurch gekennzeichnet, dass zumindest ein frontseitiger Deckel (3) durch einen Magnetverschluss (15.1, 15.2, 16.1, 16.2) in einer geschlossenen Lage haltbar ist.
